# EUROPÄISCHE PATENTSCHRIFT

(11) **EP 1 060 057 B1**
(45) Veröffentlichungstag und Bekanntmachung des Hinweises auf die Patenterteilung: **26.09.2001**
(21) Anmeldenummer: 99911727.8
(22) Anmeldetag: 02.03.1999
(51) Int. Cl.: B25J 19/00

(54) **LEITUNGSFÜHRUNG FÜR EINEN MEHRACHSIGEN INDUSTRIEROBOTER**
WIRING ARRANGEMENT FOR A MULTI-AXIAL INDUSTRIAL ROBOT
GUIDE-LIGNES POUR ROBOT INDUSTRIEL TRAVAILLANT DANS PLUSIEURS AXES

(30) Priorität: 03.03.1998 DE 29803637 U
(43) Veröffentlichungstag der Anmeldung: 20.12.2000
(73) Patentinhaber: KUKA Schweissanlagen GmbH, 86165 Augsburg (DE)
(72) Erfinder: WIEDEMANN, Kurt, D-86316 Stätzling (DE); TRAPP, Johann, D-86438 Kissing (DE)
(74) Vertreter: Ernicke, Hans-Dieter, Dipl.-Ing.
(86) Internationale Anmeldenummer: EP9901337
(87) Internationale Veröffentlichungsnummer: WO9944792

(56) Entgegenhaltungen:
- EP-A- 0 180 565
- DE-A- 3 237 184
- DE-A- 3 434 899
- DE-U- 8 814 906
- DE-U- 9 406 405
- US-A- 5 240 092

## Beschreibung

Die Erfindung betrifft einen mehrachsigen Industrieroboter mit einer Leitungsführung mit den Merkmalen im Oberbegriff des Hauptantspruchs.

Ein solcher Roboter mit einer Leitungsführung ist aus der DE-U-88 14 906 bekannt. Der Roboter hat einen Ausleger und eine Roboterhand, wobei die Leitungen in einem Bündel entlang des Auslegers bis zur Roboterhand verlegt sind und in einem ca. am mittleren Auslegerbereich angeordneten Leitungshalter geführt sind. Die Leitungen sind im Leitungshalter axial beweglich gehalten, wobei der am Ausleger mit geringem Abstand zum Auslegergehäuse angeordnete Leitungshalter zwei Drehlagerungen aufweist. Zum einen kann er sich um eine quer zum Ausleger ausgerichtete Drehachse schwenken. Zum anderen hat der Leitungshalter ein Ringlager, mit dem er sich außenseitig rund um den Ausleger drehen kann.

Die DE-U-94 06 405 zeigt einen Industrieroboter mit einer Leitungsführung, bei der die Leitungen in einer im wesentlichen geraden Linie entlang des Auslegers bis zur Roboterhand verlegt sind. Am rückwärtigen Ende des Auslegers und in dessen Schwenkachsenbereich sind die Leitungen im Boden verlegt und in einer umgebenden Spiralfeder geführt, die über ein ortsfestes Widerlager am Ausleger abgestützt ist. Am vorderen Auslegerende befindet sich ein Führungsbügel, in dem die Leitungen in einem kleinen begrenzten Bogenwinkel seitlich am Ausleger entlanggleiten können.

Ein Roboter mit einer anderen Leitungsführung ist aus der DE-34 34 899 C2 bekannt. Das Leitungsbündel ist entlang des Auslegers bis zur Roboterhand außenseitig verlegt. Im mittleren Auslegebereich ist ein Leitungshalter zur Führung des Leitungsbündels angeordnet, der sich am Ende eines Federarms befindet. Der Federarm distanziert das Leitungsbündel vom Ausleger, wobei die Leitungen in einer Schlaufe hängen, die genügend Vorrat bietet, um Längenänderungen und Leitungsstraffungen durch Bewegungen des Werkzeuges und/oder der Roboterhand auszugleichen.

Eine ähnliche Leitungsführung zeigt die DE-A-32 37 184. Auch hier ist im mittleren Auslegebereich ein Leitungshalter mit großer Armlänge angeordnet, der das Leitungsbündel vom Ausleger distanziert. Durch die Distanz soll auf der Oberseite des Auslegers eine große freihängende Schlaufe gebildet werden, die Bewegungen des Werkzeugs und / oder der Roboterhand ausgleichen soll. Diese weitausladende Leitungsführung vergrößert in unerwünschter Weise die Störgrenzen des Roboters. Dies verringert einerseits die Beweglichkeit des Roboters und erschwert andererseits die Zugänglichkeit enger Stellen am Werkstück. Zudem kann die freihängende Schlaufe in unkontrollierbarer Weise hin- und herschwingen, was an sich in Hinblick auf die Störgrenzen des Roboters unerwünscht ist und darüber hinaus die Gefahr eines Hängenbleibens der Leitungen an Hindernissen im Arbeitsbereich des Roboters mit sich bringt.

Es ist Aufgabe der vorliegenden Erfindung, eine andere Leitungsführung aufzuzeigen.

Die Erfindung löst diese Aufgabe mit den Merkmalen im Hauptanspruch.
Bei der erfindungsgemäßen Leitungsführung wird auf einen ausladenden Federarm verzichtet. Die Leitungshalterung ist gehäusenah am Ausleger drehbar gelagert. Dadurch ergeben sich geringe Belastungen für das Leitungsbündel und die Leitungshalterung. Außerdem gestattet der Leitungshalter eine axiale Beweglichkeit des Leitungsbündels, das zum Folgen der Roboterhand- und Werkzeugbewegungen durch den Leitungshalter gezogen werden kann. Die wulstartigen Schlauchpuffer können eine Art Gleitlagerung bieten und verhindern außerdem, daß das Leitungsbündel am Auslegergehäuse scheuert.

Hierbei empfiehlt es sich, die Leitungen eng am Auslegergehäuse entlang zu führen und dabei vorzugsweise auch schraubenförmig um den Ausleger zu winden. Die gewundene Form bietet ausreichend Leitungsvorrat zum Nachführen, wobei andererseits das Störverhalten und die Kollisionsgefahr durch Vermeidung freihängender Schlaufen minimiert ist. Die enge Leitungsführung verkleinert die Störgrenzen und ermöglicht durch die Verschlankung, daß der Roboter auch schwer zugängliche oder enge Stellen am Werkstück erreicht. Er kann z.B. ohne Gefahr durch eine Fensteröffnung an einer Fahrzeugkarosserie greifen und in deren Innenraum arbeiten. Die wulstartigen Schlauchpuffer sind für die enge schrauben- oder spiralförmige Leitungsführung besonders vorteilhaft. Die Anordnung und Drehlagerung der Leitungshalter unterstützt die gewundene enge Leitungsführung.

Für die enge Leitungsführung ist es ferner vorteilhaft, am Ende des Auslegers einen weiteren Leitungshalter gehäusenah anzuordnen und diesem eine andere Drehachse als dem ersten Leitungshalter im Auslegermittelbereich zu geben. Für die enge Leitungsführung ist es besonders vorteilhaft, wenn ein federnder Schlauchspanner für die Leitungen vorhanden ist, der vorzugsweise am rückwärtigen Auslegerende angeordnet ist.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Seitenansicht eines mehrachsigen Industrieroboters mit einer Leitungsführung und
- Figur 2:: eine perspektivische Ansicht der Anordnung von Figur 1 von der gegenüberliegenden Seite.

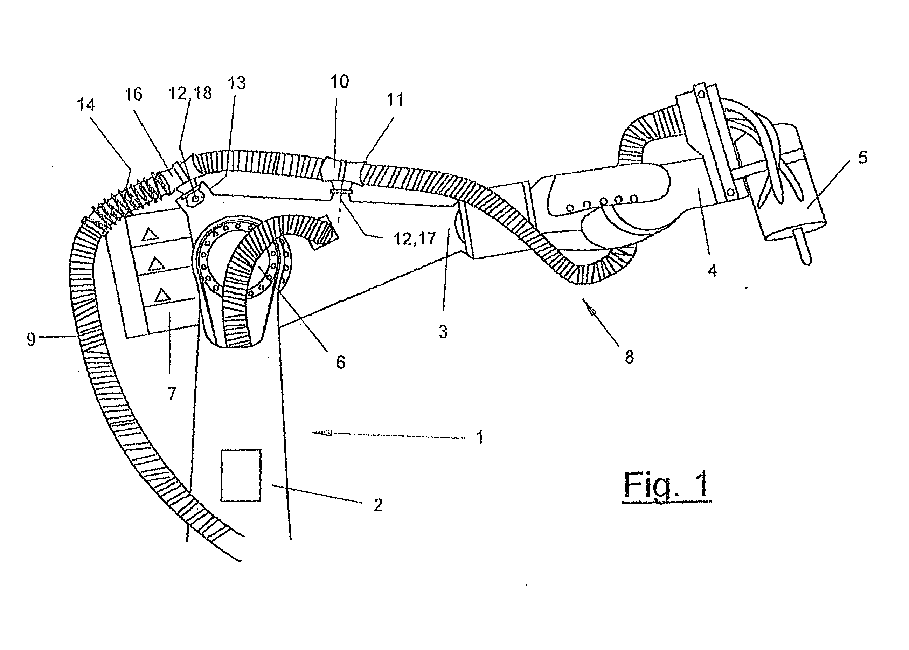

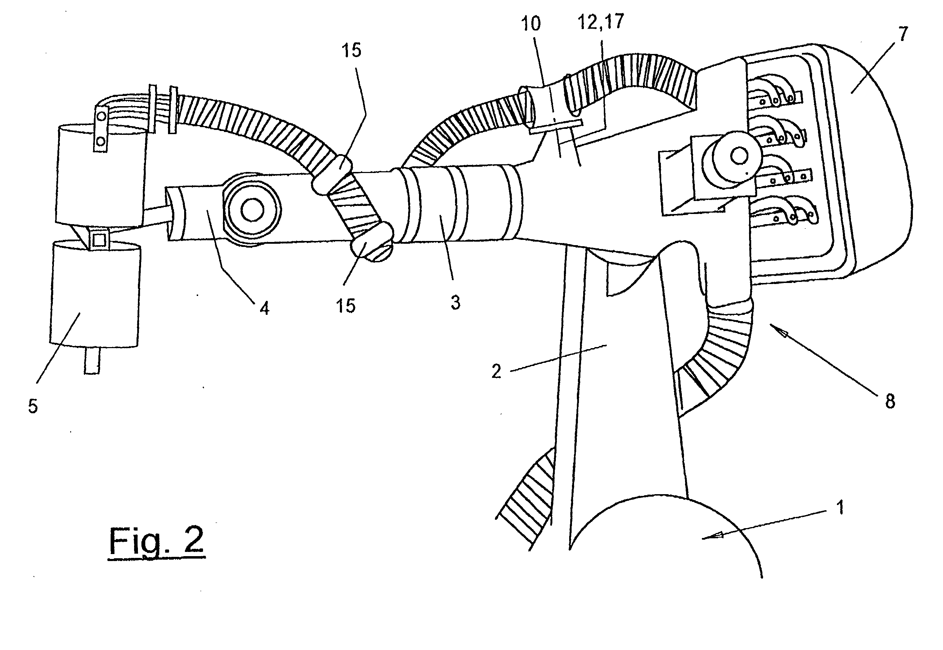

Die Erfindung betrifft eine Leitungsführung (8) für einen mehrachsigen Industrieroboter (1), wie er in Figur 1 und 2 in Teilen und abgebrochen dargestellt ist, wobei Figur 1 jedoch den wesentlichen Schlauchpuffer nicht zeigt. Der Industrieroboter (1) hat z.B. ein bodenseitig drehbares Gestell (nicht dargestellt), an dem eine Schwinge (2) um eine im wesentlichen horizontale Achse schwenkbar angelenkt ist. Die Schwinge (2) trägt am oberen Ende einen Ausleger (3), der mit einer ebenfalls im wesentlichen horizontalen Schwenkachse (6) angelenkt ist. Der Ausleger (3) hat am vorderen Ende die vorzugsweise zwei- oder dreiachsige Roboterhand (4), die das Werkzeug (5) führt. Am rückwärtigen Auslegerende sind ein oder mehrere Motoren (7) angeordnet. Diese sind vor allem für den Antrieb der einzelnen Teile der Roboterhand (4) vorgesehen, können aber auch den Ausleger (3) gegenüber der Schwinge (2) antreiben. Als Ausleger wird in dieser Ausführungsform das letzte vor der Roboterhand (4) befindliche Roboterglied verstanden.

Der Industrieroboter (1) besitzt ein oder mehrere Leitungen zur Versorgung der Roboterbauteile und/oder des Werkzeuges (5). Dies können Stromkabel, Schlauchleitungen für fluidische Betriebsmittel oder dergleichen sein. Vorzugsweise sind die Leitungen zu einem Leitungsbündel oder Leitungspaket (9) zusammengefaßt und in einem Hüllschlauch angeordnet. Das Leitungspaket (9) ist entlang der Roboterbauteile (2,3) bis zur Hand (4) und gegebenenfalls bis zum Werkzeug (5) verlegt.

Die Leitungsführung (8) besitzt etwa im mittleren Bereich des Auslegers (3) einen Leitungshalter (10), der gehäusenah am Ausleger (3) angeordnet ist. Der Leitungshalter (10) ist vorzugsweise als ein kurzer Stummelhalter ausgebildet und befindet sich vorzugsweise auf der Oberseite des Auslegers (3). Er hat ein Drehlager (12), das eine im wesentlichen quer zur Auslegerachse ausgerichtete und bei Auslegerstrecklage im wesentlichen senkrecht stehende Drehachse (17) besitzt.

Der Leitungshalter (10) besitzt zur Aufnahme des Leitungspaketes (9) eine Führung (11), die das Leitungspaket (9) außenseitig umfaßt und längsbeweglich führt. Die Führung (11) kann z.B. als rohrförmige und beidseits an den Enden trichterförmig sich erweiternde Tülle ausgebildet sein.

Der Ausleger (3) kann an seinem rückwärtigen Ende einen weiteren Leitungshalter (16) aufweisen. Dieser ist z.B. an einem in oberen Eckbereich befindlichen, kleinen, vorstehenden Gehäuseansatz (13) des Auslegers (3) angeordnet. Er besitzt ebenfalls ein Drehlager (12). Dessen Drehachse (18) ist quer zu der Drehachse (17) des ersten Leitungshalters (10) ausgerichtet und nimmt eine im wesentlichen horizontale Lage ein. Die Drehachse (18) kann im wesentlichen parallel zur Schwenkachse (6) verlaufen. Zusätzlich kann der Leitungshalter (16) auch noch eine weitere Drehachse ähnlich der Drehachse (12) aufweisen.

Wie Figur 1 und 2 verdeutlichen, ist das Leitungspaket (9) außenseitig entlang der Schwinge (2) und weiter entlang des Auslegers (3) geführt. Die Leitungsführung (8) ist dabei vorzugsweise eng und mit geringem Seitenabstand entlang des Auslegers (3) geführt. Das Leitungspaket (9) ist dabei schraubenförmig um den Ausleger (3) gewunden.

Aus Figur 2 ist ersichtlich, daß das Leitungspaket (9) ein oder mehrere Schlauchpuffer (15) aufweisen kann, die es vom Auslegergehäuse distanzieren. Hierbei kann es sich beispielsweise um wulstartig vorstehende Muffen handeln. Diese bestehen aus einem verschleißfesten und relativ reibungsarmen Material. Die Schlauchpuffer (15) bieten auch eine Gleitführung für das Leitungspaket (9). Sie sind vorzugsweise im schraubenförmigen Windungsbereich des Leitungspaketes (9) angeordnet. Sie können aber auch in dem im wesentlichen gradlinigen Leitungsbereich zwischen den oben liegenden Leitungshaltern (10,16) angeordnet sein.

Das Leitungspaket (9) kann ferner einen federnden Schlauchspanner (14) besitzen. Dieser ist z.B. hinter dem zweiten Leitungshalter (16) angeordnet. Der Schlauchspanner (14) stützt sich am vorderen Ende an dem Leitungshalter (16) und am rückwärtigen Ende an einem auf dem Leitungspaket (9) befestigten Anschlagring ab. Der Schlauchspanner (14) besteht aus einer Schrauben-Druckfeder, die das Leitungspaket (9) nach hinten unter Zug hält und für die richtige Leitungsbiegung am Übergang zwischen den Schwinge (2) und dem Ausleger (3) sorgt. Der Schlauchspanner (14) kann im einzelnen wie in der DE- 94 06 405 U1 ausgebildet sein.

Abwandlungen der gezeigten Aus führungsform sind in verschiedener Weise möglich. Zum einen kann nur ein einzelner Leitungshalter (10) vorhanden sein, der gegebenenfalls auch seitlich am Auslegergehäuse (3) gelagert ist. Auf den Schlauchspanner (14) kann bei geeigneter Ausbildung des Leitungspaketes (9) auch verzichtet werden. Gleichermaßen muß auch die schrauben- oder spiralförmige Windung des Leitungspaketes (9) nicht vorhanden sein. Ansonsten können die verschiedenen Bauteile des Industrieroboters (1) und das Werkzeug (5) in beliebig geeigneter Weise ausgebildet sein. Variabel sind ferner auch die Zahl, Ausbildung und Anordnung der einzelnen Leitungen im Leitungspaket (9).

### BEZUGSZEICHENLISTE

- 1: Industrieroboter
- 2: Schwinge
- 3: Ausleger
- 4: Hand
- 5: Werkzeug
- 6: Schwenkachse, Lager
- 7: Motoren
- 8: Schlauchführung
- 9: Leitungspaket
- 10: Leitungshalter
- 11: Führung, Tülle
- 12: Drehlager
- 13: Ansatz
- 14: Schlauchspanner
- 15: Schlauchpuffer, Muffe
- 16: Leitungshalter
- 17: Drehachse
- 18: Drehachse

## Patentansprüche

1. Leitungsanordnung für einen mehrachsigen Industrieroboter (1) mit einem Ausleger (3) und einer Roboterhand (4), wobei die Leitungen (9) in einem Bündel angeordnet und in einem Leitungshalter (10) axial beweglich gehalten sind, wobei die Leitungen (9) für eine Verlegung entlang des Auslegers (3) bis zur Robaterhand (4) vorgesehen sind und der Leitungshalter (10) ein Drehlager (12) aufweist für eine drehbare Anordnung circa am mittleren Auslegerbereich und mit geringem Abstand zum Auslegergehäuse, **dadurch gekennzeichnet, dass** zusätzlich an den Leitungen (9) wulstartig vorstehende Schlauchpuffer (15) angeordnet sind.

2. Leitungsanordnung nach Anspruch 1, **dadurch gekennzeichnet, dass** der Leitungshalter (10) für eine Anordnung auf der Oberseite des Auslegers (3) vorgesehen ist und bei dessen horizontaler Strecklage eine im wesentlichen senkrechte Drehachse (17) aufweist.

3. Leitungsanordnung nach Anspruch 1 oder 2, **dadurch gekennzeichnet, dass** die Leitungen (9) für eine Führung eng am Ausleger (3) entlang vorgesehen sind.

4. Leitungsanordnung nach Anspruch 1, 2 oder 3, **dadurch gekennzeichnet, dass** die Leitungen (9) für eine schraubenförmig um den Ausleger (3) gewundene Führung vorgesehen sind.

5. Leitungsanordnung nach einem der Ansprüche 1 bis 4, **dadurch gekennzeichnet, dass** die Leitungsanordnung einen weiteren Leitungshalter (16) aufweist, der für eine Anordnung am rückwärtigen Ende des Auslegers (3) vorgesehen ist.

6. Leitungsanordnung nach einem der Ansprüche 1 bis 5, **dadurch gekennzeichnet, dass** der Leitungshalter (16) ein Drehlager (12) mit einer im wesentlichen horizontale Drehachse (18) aufweist und zur Anordnung an einem hochstehenden Ansatz (13) am Ende des Auslegers (3) vorgesehen ist.

7. Leitungsanordnung nach einem der Ansprüche 1 bis 6, **dadurch gekennzeichnet, dass** an den Leitungen (9) ein federnder Schlauchspanner (14) angeordnet ist.

## Claims

1. Line arrangement for a multi-axis industrial robot (1) having a cantilever arm (3) and having a robot hand (4), with the lines (9) being arranged in a harness and being held in a line holder (10) such that they can move axially, with the lines (9) being intended for laying along the cantilever arm (3) as far as the robot hand (4), and the line holder (10) having a rotating bearing (12) for an arrangement, which can rotate, approximately on the central cantilever arm area and at a short distance from the cantilever arm housing, **characterized in that** flexible-tube buffers (15), which project like beads, are also arranged on the lines (9).

2. Line arrangement - according to Claim 1, **characterized in that** the line holder (10) is intended to be arranged on the upper face of the cantilever arm (3) and has an essentially vertical rotation axis (17) when in its horizontal extended position.

3. Line arrangement according to Claim 1 or 2, **characterized in that** the lines (9) are intended to be routed closely along the cantilever arm (3).

4. Line arrangement according to Claim 1, 2 or 3, **characterized in that** the lines (9) are intended to be routed such that they are wound in a helical shape around the cantilever arm (3)⁻.

5. Line arrangement according to one of Claims 1 to 4, **characterized in that** the line arrangement has a further line holder (16), which is intended to be arranged at the rearward end of the cantilever arm (3).

6. Line arrangement according to one of Claims 1 to 5, **characterized in that** the line holder (16) has a rotating bearing (12) with an essentially horizontal rotation axis (18), and is intended to be arranged on an attachment (13) which projects upwards at the end of the cantilever arm (3).

7. Line arrangement according to one of Claims 1 to 6, **characterized in that** a sprung flexible-tube tensioning device (14) is arranged on the lines (9).

## Revendications

1. Guide-lignes pour un robot (1) industriel travaillant dans plusieurs axes qui comporté un bras (3) et une main (4) de robot, les lignes (9) étant disposées en faisceau et maintenues en mobilité axiale dans un support (10) de lignes, les lignes (9) étant prévues pour une pose le long du bras (3) jusqu'à la main (4) de robot et le support (10) de lignes comportant un palier (12) rotatif pour un montage à rotation environ dans la région médiane du bras et à faible distance du carter du bras, **caractérisé en ce qu**'il est en outre prévu des tampons (15) de flexible dépassant des lignes (9) à la manière de bourrelets.

2. Guide-lignes suivant la revendication 1, **caractérisé en ce que** le support (10) de lignes est prévu pour une disposition sur le dessus du bras (3), et possède un axe (17) de rotation essentiellement vertical dans la position déployée horizontale du bras (3).

3. Guide-lignes suivant la revendication 1 ou 2, **caractérisé en ce que** les lignes (9) sont prévues pour être étroitement guidées le long du bras (3).

4. Guide-lignes suivant la revendication 1, 2 ou 3, **caractérisé en ce que** les lignes (9) sont prévues pour un guidage enroulé en hélice autour du bras (3).

5. Guide-lignes suivant l'une des revendications 1 à 4, **caractérisé en ce que** le guide-lignes comporte un autre support (16) de lignes, qui est prévu pour être disposé à l'extrémité arrière du bras (3).

6. Guide-lignes suivant l'une des revendications 1 à 5, **caractérisé en ce que** le support (16) de lignes comporte un palier (12) rotatif doté d'un axe (18) de rotation essentiellement horizontal, et est prévu pour être disposé sur un appendice (13) dressé à l'extrémité du bras (3).

7. Guide-lignes suivant l'une des revendications 1 à 6, **caractérisé en ce qu**'un tendeur (14) élastique de flexible est disposé sur les lignes (9).
